# EUROPEAN PATENT APPLICATION

(11) **EP 3 100 921 A1**
(43) Date of publication of application: **07.12.2016**
(21) Application number: 14880923.9
(22) Date of filing: 23.05.2014
(51) Int. Cl.: B60T 7/06

(54) **BACKDOWN PREVENTING DEVICE FOR VEHICULAR PEDAL DEVICE**

(30) Priority: 31.01.2014 JP 2014017766
(71) Applicant: Toyoda Iron Works Co., Ltd., Toyota-shi Aichi 471-8507 (JP)
(72) Inventor: TSUZUKI Hiroaki, Toyota-shi Aichi 471-8507 (JP); TSUGUMA Tomohiro, Toyota-shi Aichi 471-8507 (JP)
(74) Representative: TBK
(86) International application number: PCT/JP2014/063755
(87) International publication number: WO 2015/114844

(57) **Abstract**

When the dash panel is displaced backwards, the intermediate lever 26 is not pivoted relatively in an outputting direction, but a second connecting pin 42 of a coupling link 28 is detached from a cutout 46 of the intermediate lever 26 upon engagement of a contact section 54 provided in the second pedal bracket 36 with an operation pedal 18 to release a connection between the intermediate lever 26 and the operation pedal 18 is released, and the operation pedal 18 is made to pivot relatively in the direction of the tread operation. Regardless of whether or not the pivoting in the outputting direction of the intermediate lever 26 is possible due to the operation rod 32 not being able to be pushed in, the backdown of the tread section of the operation pedal 18 is prevented as appropriate and a backdown preventing effect is stably achievable.

## Description

### FIELD

The present invention relates to a backdown preventing device for vehicular pedal device, which prevents a tread section of an operation pedal from moving backwards to a driver's seat side when the dash panel is displaced backwards to the driver's seat side.

### BACKGROUND

There is known of a backdown preventing device that is related to a vehicular pedal device including (a) a pedal bracket arranged to a dash panel, (b) an operation pedal arranged to the pedal bracket pivotally about an axis of a first support shaft, whose tread section provided in a lower-end portion thereof is trod towards a front side of the vehicle, and (c) an intermediate lever arranged to the pedal bracket pivotally about an axis of a second support shaft parallel to the first support shaft, the intermediate lever being coupled to the operation pedal via a coupling link and being made to pivot mechanically in an outputting direction in connection with a tread operation of the operation pedal to make a predetermined output member operate, wherein (d) the tread section of the operation pedal is prevented from being moved backwards to the driver's seat side when the dash panel is displaced backwards to the driver's seat side (refer to Patent Documents 1, 2).

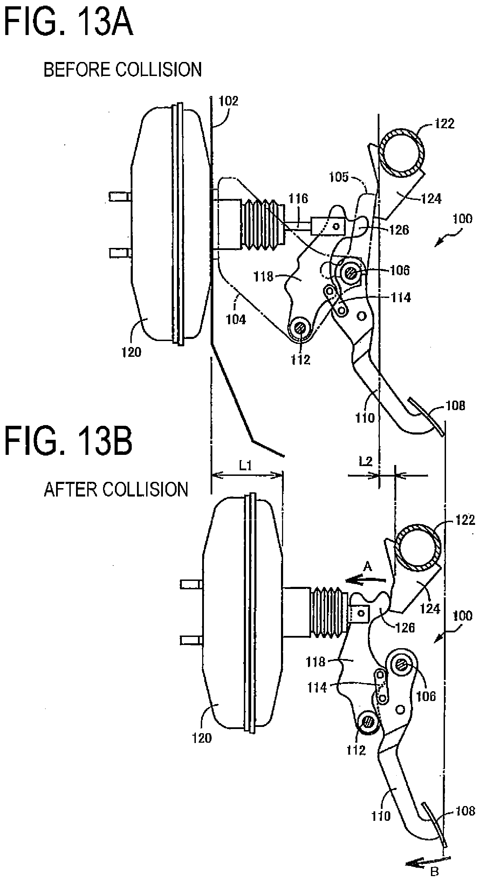

Fig. 13 is one example of such a backdown preventing device for vehicular pedal device and relates to a brake pedal device 100. This brake pedal device 100 includes (a) a first pedal bracket 104 arranged to a dash panel 102, (b) an operation pedal 110 arranged to the first pedal bracket 104 pivotally about an axis of a first support shaft 106, whose tread section 108 provided in a lower-end portion thereof is trod towards a front side of the vehicle, and (c) an intermediate lever 118 arranged to the first pedal bracket 104 pivotally about an axis of a second support shaft 112 parallel to the first support shaft 106, the intermediate lever 118 being coupled to the operation pedal 110 via a coupling link 114 and being made to pivot mechanically in connection with the operation pedal 110 to push an output member 116 that projects from the dash panel 102. The output member 116 is an operation rod of a brake booster 120, and is pushed inside the brake booster 120 via the intermediate lever 118 when the operation pedal 110 is trod. Additionally, a second pedal bracket 105 is arranged to a vehicle body member 122 such as an instrument panel reinforcement on a driver's seat side of the dash panel 102, which second pedal bracket 105 supports the first support shaft 106 together with the first pedal bracket 104. That is to say, the first pedal bracket 104 and the second pedal bracket 105 are made to overlap each other and be fastened on either side of the first support shaft 106, and are arranged to support each other.

Furthermore, a backdown preventing member 124 is provided on a vehicle body member 122; when a protrusion 126 of the intermediate lever 118 is made into contact with the backdown preventing member 124 based on a difference between backward displacement amounts L1 and L2 of the respective dash panel 102 and vehicle body member 122 at a time of collision (L1>L2), the intermediate lever 118 is pivoted relatively in an outputting direction (vehicle front side), which presses the output member 116 as illustrated by the arrow A in (b) of Fig. 13. Together with this pivoting of the intermediate lever 118, the operation pedal 110 connected via the coupling link 114 is pivoted in a direction of the tread operation, as illustrated by the arrow B, and the backdown of the tread section 108 to the driver's seat side is prevented.

### [Related Art]

### [Patent Document]

Patent Document 1: Japanese Laid-open Patent Publication No. H10-324228
Patent Document 2 : Japanese Laid-open Patent Publication No. H11-222156
Patent Document 3: Japanese Laid-open Patent Publication No. 2012-128659

### SUMMARY

### PROBLEMS TO BE SOLVED BY THE INVENTION

However, such a conventional backdown preventing device for vehicular pedal device is on the assumption that the intermediate lever 118 pivots in the outputting direction while relatively pressing the output member 116, as a result of the intermediate lever 118 coming into contact with the backdown preventing member 124. Therefore, if the output member 116 cannot be pushed inside the brake booster 120 due to distortion of sections at a time of collision, the intermediate lever 118 cannot be pivoted in the outputting direction, thus causing a possibility that the backdown preventing effect cannot be achieved appropriately, which effect prevents the backdown of the tread section 108 by pivoting the operation pedal 110 in the direction of the tread operation.

Patent Document 3 discloses a backdown preventing device that is capable of pivoting the operation pedal in the direction of the tread operation even in a case in which the output member cannot be pushed into the brake booster, however the assumption differs from the above vehicular pedal device that carries out output via the intermediate lever.

The present invention was accomplished in view of the above situation, and an object thereof is to appropriately achieve a backdown preventing effect that prevents the backdown of the tread section by making the operation pedal pivot in a direction of the tread operation, even in a case in which the intermediate lever cannot be pivoted in an outputting direction by for example the output member not being able to be pushed in.

### MEANS FOR SOLVING THE PROBLEMS

In order to attain such object, a first invention is characterized in that, in a backdown preventing device for vehicular pedal device that includes (a) a pedal bracket arranged to a dash panel; (b) an operation pedal arranged to the pedal bracket pivotally about an axis of a first support shaft, whose tread section provided in a lower-end portion of the operation pedal is trod towards a front side of a vehicle as a tread operation of the operation pedal; and (c) an intermediate lever arranged to the pedal bracket pivotally about an axis of a second support shaft parallel to the first support shaft, the intermediate lever being coupled to the operation pedal via a coupling link and adapted to operate a predetermined output member by being pivoted in an outputting direction mechanically in connection with the tread operation of the operation pedal, (d) the backdown preventing device is adapted to prevent the tread section of the operation pedal from moving backwards toward a driver's seat side when the dash panel is displaced backwards toward the driver's seat side, charactering in that: (e) either one of a first coupling section on a side of the operation pedal of the coupling link or a second coupling section on a side of the intermediate lever of the coupling link is a separable coupling section coupled in a separable manner via a cutout, and (f) a backdown preventing member supported to a vehicle body member provided in a side closer to the driver's seat from the dash panel is provided with a stopper section being adapted to be engaged with the operation pedal at a time of backward displacement of the dash panel to make the operation pedal pivot relatively in the direction of the tread operation, and making the separable coupling section separate to release a connection between the operation pedal and the intermediate lever by the coupling link.

The vehicle body member disposed closer to the driver's seat than the dash panel is for example an instrument panel reinforcement (reinforcement member of an instrument panel) or a cowl bracket; generally, the possibility of the displacement to the driver's seat side, that is to say, towards the back side of the vehicle, or a deformation amount thereto, when a large load is applied from the front of the vehicle such as a time of collision, is smaller compared to the dash panel, and the present invention is a technology that prevents the backdown of the tread section of the operation pedal on the assumption that these backward displacement amounts are different.

A second invention is characterized in that, in a backdown preventing device for vehicular pedal device that includes (a) a pedal bracket arranged to a dash panel; (b) an operation pedal arranged to the pedal bracket pivotally about an axis of a first support shaft, whose tread section provided in a lower-end portion of the operation pedal is trod towards a front side of a vehicle as a tread operation of the operation pedal; and (c) an intermediate lever arranged to the pedal bracket pivotally about an axis of a second support shaft parallel to the first support shaft, the intermediate lever being coupled to the operation pedal via a coupling link and adapted to operate a predetermined output member by being pivoted in an outputting direction mechanically in connection with the tread operation of the operation pedal, (d) the backdown preventing device is adapted to prevent the tread section of the operation pedal from moving backwards toward a driver's seat side when the dash panel is displaced backwards toward the driver's seat side, charactering in that: (e) a first coupling section on a side of the operation pedal of the coupling link is connected relatively pivotally about a link coupling point of the operation pedal, and a second coupling section on a side of the intermediate lever of the coupling link is fixed detachably to a cutout provided in the intermediate lever, and (f) a backdown preventing member supported to a vehicle body member provided in a side closer to the driver's seat from the dash panel is provided with a stopper section being adapted to be engaged with the operation pedal at a time of backward displacement of the dash panel to make the operation pedal pivot relatively in the direction of the tread operation, and making the second coupling section detach from the cutout to release a connection between the operation pedal and the intermediate lever by the coupling link.

A third invention is characterized in that, in a backdown preventing device for vehicular pedal device of the second invention, the backdown preventing member includes a guide section, adapted to guide so that the second coupling section does not detach from the cutout of the intermediate lever and to pivot the intermediate lever in an outputting direction in connection with the operation pedal in a case in which the operation pedal is trod from the initial position, whereas in a case of backwards displacement of the dash panel, allow for the second coupling section to escape from a guide region and detach from the cutout.

A fourth invention is characterized in that, in the backdown preventing device for vehicular pedal device of the second invention or third invention, the backdown preventing member is provided with a contact section provided as the stopper section, the contact section being made into contact with the first coupling section coupled to the operation pedal at a time of backwards displacement of the dash panel.

A fifth invention is characterized in that, the backdown preventing device for vehicular pedal device of the first invention to third invention, comprising (a) a backdown preventing link connected relatively pivotally across the operation pedal and the backdown preventing member, to which at least one of the coupling sections is connected via a long hole to allow for a tread operation of the operation pedal, wherein (b) the one of the coupling sections of the backdown preventing link contacts a one end portion of the long hole at a time of backwards displacement of the dash panel to make the operation pedal to pivot relatively in the direction of the tread operation, and among the one of the coupling sections and the one end portion of the long hole, the one on arranged a side closer to the backdown preventing member is the stopper section.

### EFFECTS OF THE INVENTION

In the backdown preventing device for vehicular pedal device of the first invention, either one of the pair of the first coupling section and the second coupling section of the coupling link that couples the operation pedal and the intermediate lever serves as a separable coupling section connected in a separable manner via a cutout; when the dash panel is displaced backwards for example at a time of collision, the operation pedal is made to engage with a stopper section to be relatively pivoted in the direction of the tread operation, and the separable coupling section is separated to release the connection of the operation pedal and the intermediate lever by the coupling link. As a result, the operation pedal is relatively pivoted in the direction of the tread operation regardless of a behavior of the intermediate lever, thus preventing the backdown of the tread section. That is to say, the intermediate lever is not relatively pivoted in the outputting direction when the dash panel is displaced backwards, but an engagement of the stopper section provided in the backdown preventing member with the operation pedal makes the separable coupling section of the coupling link separate and release the connection between the intermediate lever and the operation pedal, and makes the operation pedal relatively pivot in the direction of the tread operation. This thus prevents the backdown of the tread section of the operation pedal regardless of whether or not the pivoting in the outputting direction of the intermediate lever is possible due to the output member not being able to be pushed in, and the backdown preventing effect becomes stably achievable.

The second invention corresponds substantially to one embodiment of the first invention; the second coupling section fixed detachable to the cutout provided in the intermediate lever is equivalent to the separable coupling section, and the same effect is achievable as that of the first invention. More specifically, the second coupling section on the intermediate lever side of the coupling link that couples the operation pedal with the intermediate lever is fixed in a detachable manner to the cutout provided in the intermediate lever, and when the dash panel is displaced backwards for example at the time of collision, the operation pedal is made to engage with the stopper section and to pivot relatively in the direction of the tread operation, and the second coupling section is detached from the cutout, by which the connection of the operation pedal with the intermediate lever by the coupling link is released. Accordingly, the backdown of the tread section is prevented, by the operation pedal being pivoted relatively in the direction of the tread operation regardless of the behavior of the intermediate lever. That is to say, the intermediate lever is not relatively pivoted in the outputting direction when the dash panel is displaced backwards, but an engagement of the stopper section provided in the backdown preventing member with the operation pedal makes the second coupling section of the coupling link be detached from the cutout of the intermediate lever to release the connection between the intermediate lever and the operation pedal, and causes the operation pedal to relatively pivot in the direction of the tread operation. This thus prevents the backdown of the tread section of the operation pedal regardless of whether or not the pivoting in the outputting direction of the intermediate lever is possible due to the output member not being able to be pushed in, and the backdown preventing effect becomes stably achievable.

In the third invention, the backdown preventing member includes a guide section; in a case in which the operation pedal is trod from an initial position thereof, the guide section guides so that the second coupling section does not detach from the cutout of the intermediate lever and makes the intermediate lever pivot in the outputting direction in connection with the operation pedal, whereas at a time of backward displacement of the dash panel, the guide section allows for the second coupling section to escape from a guide region and detach from the cutout. Therefore, while the intermediate lever is securely pivoted in the outputting direction in connection with the operation pedal without the second coupling section detaching from the cutout to operate the output member at a time of tread operation of the operation pedal, when the dash panel is displaced backwards for example at a time of collision, the second coupling section escapes from the guide region by the guide section, which thus allows for the second coupling section to detach from the cutout and the operation pedal to become engaged with the stopper section and be pivoted relatively in the direction of the tread operation; this thus makes the second coupling section detached from the cutout and the connection between the operation pedal and the intermediate by the lever coupling link released securely. In other words, it is possible to detach the second coupling section from the cutout and securely release the connection between the operation pedal and the intermediate lever, while ensuring freedom in settings of a coupled position of the first coupling section and second coupling section, that is to say, freedom in settings of load transfer behavior by the coupling link.

In the fourth invention, a contact section made to be in contact with the first coupling section coupled to the operation pedal at a time of backward displacement of the dash panel is provided in the backdown preventing member as the stopper section; this thus makes the number of members small, and thus allows for easy and low cost configuration.

In the fifth invention, the backdown preventing link is arranged across the operation pedal and the backdown preventing member, and at least one of the coupling sections is connected via a long hole; by having one of the coupling sections of the backdown preventing link be in contact with one end portion of the long hole at the time of backward displacement of the dash panel, the operation pedal is relatively pivoted in the direction of the tread operation. Accordingly, the freedom in design of the backdown preventing member related to the stopper section is high, and the device can be configured in a compact manner.

### BRIEF DESCRIPTION OF DRAWINGS

[Fig. 1] Fig. 1 is a left side view illustrating a schematic configuration of a brake pedal device to which the present invention is applied.
[Fig. 2] Fig. 2 is a side view illustrating a part II in Fig. 1, that is to say, a part in which a coupling link that couples an operation pedal with an intermediate lever is arranged, in an enlarged manner.
[Fig. 3] Fig. 3 is a side view illustrating in detail of a shape of an intermediate lever, with a second pedal bracket (backdown preventing member) in Fig. 2 omitted and having a coupling link illustrated by virtual lines.
[Fig. 4] Fig. 4 is a side view illustrating a state in which an operation pedal is trod in the Example of Fig. 1.
[Fig. 5] Fig. 5 is a side view illustrating an initial state of collision in which the intermediate lever is pivoted from an initial position in an opposite direction, in the Example of Fig. 1.
[Fig. 6] Fig. 6 is a side view illustrating a state after the collision, in which the intermediate lever is further pivoted in the opposite direction from the state of Fig. 5, and in which the operation pedal is pivoted relatively in the direction of the tread operation by the engagement with the second pedal bracket.
[Fig. 7] Fig. 7 is a view describing another Example of the present invention, and is a side view corresponding to Fig. 1.
[Fig. 8] Fig. 8 is a side view illustrating a part VIII in Fig. 7, that is to say, a part in which a coupling link coupling the operation pedal and the intermediate lever is arranged, in an enlarged manner.
[Fig. 9] Fig. 9 is a perspective view of the backdown preventing lever and the backdown preventing link of Fig. 8, seen from a diagonally-front side of a vehicle.
[Fig. 10] Fig. 10 is a side view illustrating a state in which the operation pedal is trod in the Example of Fig. 7.
[Fig. 11] Fig. 11 is a side view illustrating an initial state of collision in which the intermediate lever is pivoted from the initial position in an opposite direction in the Example of Fig. 7.
[Fig. 12] Fig. 12 is a side view illustrating a state after the collision, in which the intermediate lever is further pivoted in the opposite direction from the state of Fig. 11 and the operation pedal is pivoted relatively in the direction of the tread operation by an effect of the backdown preventing lever and the backdown preventing link.
[Fig. 13] Fig. 13 is a view describing a conventional backdown preventing device of a brake pedal device, and is a view illustrating in comparison a state before collision and a state after collision.

### DESCRIPTION OF THE EMBODIMENTS

The present invention is suitably applicable to a vehicular pedal device in which an output member is arranged projecting out from a dash panel and pivotally connected to an intermediate lever, for example a brake pedal device for a service brake in which an operation rod of a brake booster of a hydraulic brake is coupled to an intermediate lever as an output member. The pedal bracket may just have a single pedal bracket fixedly installed to the dash panel, however it is preferable to attach the pedal bracket across the dash panel and a vehicle body member on the driver's seat side of the dash panel. Two pedal brackets fixedly installed to the respective dash panel and vehicle body member may be connected integrally by being overlapped by each other at a part in which a first support shaft and/or a second support shaft is/are arranged and tightened together.

The second invention to fourth invention have the second coupling section fixed detachably to a cutout provided in the intermediate lever, and the second coupling section is equivalent to the separable coupling section of the first invention. However, in implementing the first invention, the first coupling section may be fixed detachably to the cutout provided in the operation pedal. Moreover, it is also possible to provide a cutout in the coupling link, which cutout fixes detachably with a connecting pin or the like arranged to the intermediate lever or operation pedal.

In the backdown preventing member of the first invention, a guide section similar to that of the third invention is provided as necessary. That is to say, a guide section is provided, which guides the coupling link so that the separable coupling section does not separate and thus the intermediate lever is pivoted in an outputting direction in connection with the operation pedal in a case in which the operation pedal is trod from an initial position, and at a time of backwards displacement of the dash panel, allows for the separable coupling section to escape from a guide region and separate via the cutout. This guide section is configured to be engaged to the coupling link or separable coupling section for example throughout a treading stroke of the operation pedal to prevent the separation, however may be configured to be engaged to the coupling link or the like in just one region where the separation may occur. Depending on a positional relationship of the pair of the coupling sections of the coupling link, it is possible to make the separation impossible when the operation pedal is trod from an initial position, and be separable when pivoted by a predetermined amount in the opposite direction; in this case, the guide section is not necessarily required. The same applies with the guide section of the third invention.

The intermediate lever is arranged for example in an up-down direction, and is arranged pivotally to the pedal bracket in an intermediate section or a lower-end portion in the up-down direction in such a manner that an output member is connected to an upper portion thereof and is pressed toward the front side of the vehicle. The intermediate lever is for example arranged on a side more front of the vehicle than the operation pedal, however various aspects are possible, such as providing the intermediate lever on an upper portion of the operation pedal. This intermediate lever is made for example to move substantially parallel towards the back side of the vehicle together with the bracket such that the separable coupling section escapes from a guide region of the guide section, when for example the dash panel is made to be displaced backwards; however, this may also be a case in which the intermediate lever is pivoted about the second support shaft in a direction opposite to the outputting direction, via the output member. That is to say, when the backward displacement amount of the second support shaft of the intermediate lever is smaller than a displacement amount of the output member, for example in a case in which the pedal bracket is attached not just to the dash panel but also across the vehicle body member on the driver's seat side, the intermediate lever is pivoted into the opposite direction.

Although suitably used as the backdown preventing member is for example a pedal bracket fixedly installed integrally to the vehicle body member, which pedal bracket supports a second support shaft, or a backdown preventing lever arranged pivotally about the second support shaft and whose tip part is made into contact with the vehicle body member to hinder the pivoting to the back side of the vehicle, various aspects are possible, such as one which is merely integrally fixedly installed to the vehicle body member. The contact section functioning as the stopper section in the fourth invention is made into contact with the first coupling section of the coupling link, however when implementing the second invention, this may be made into contact with any part of the operation pedal. An engagement section extending towards the backdown preventing member may be provided in the operation pedal and may be made to engage with the stopper section of the backdown preventing member. In the fifth invention, a backdown preventing link is arranged across the operation pedal and the backdown preventing member and are connected via a long hole; this long hole, however, may be provided in any of the operation pedal, the backdown preventing member, and the backdown preventing link. In a case in which the long hole is provided in the backdown preventing member, one end portion of the long hole is equivalent to the stopper section, and in a case in which the long hole is provided to the operation pedal, one of the coupling sections to which the long hole is engaged is equivalent to the stopper section. In short, the stopper section is either one on the backdown preventing member side, of the one of the coupling sections and the one end portion of the long hole that are engaged to each other.

### [Examples]

The following describes in details of an Example of the present invention, with reference to the drawings.

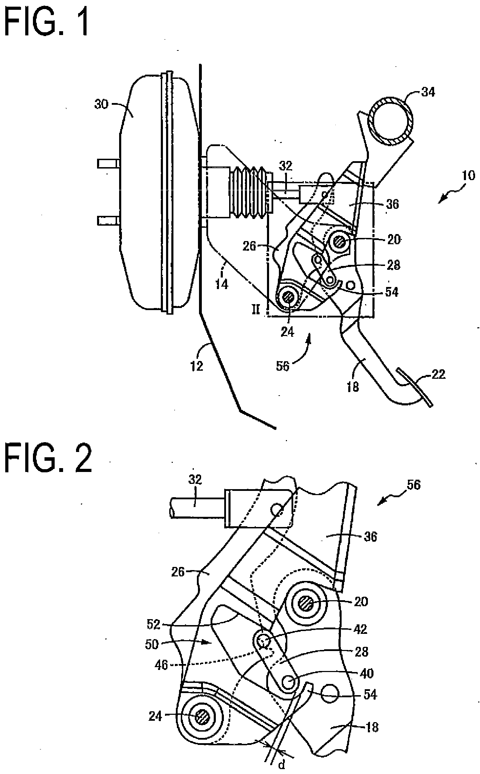

Fig. 1 is a view describing a brake pedal device 10 for a service brake, to which the present invention is applied, and is a left side view seen from a left side of the vehicle, and Fig. 2 is an enlarged view of part II in Fig. 1. The brake pedal device 10 is equivalent to the vehicular pedal device; a first pedal bracket 14 is fixed integrally to a dash panel 12 that partitions the engine compartment from a vehicle interior, and an operation pedal 18 is arranged pivotally about a first support shaft 20 that is substantially horizontal and substantially parallel to a vehicle width direction. The operation pedal 18 is supported pivotally about an axis of the first support shaft 20 in an upper end portion of the operation pedal 18, and a tread section 22 provided in a lower-end portion thereof is to be trod towards a front side of the vehicle (left direction in Fig. 1). Fig. 1 is a view illustrating the first pedal bracket 14 by virtual lines, to explicitly illustrate an inner structure thereof.

The first pedal bracket 14 also has an intermediate lever 26 arranged pivotally about a second support shaft 24 parallel to the first support shaft 20, on a side more front of the vehicle than the operation pedal 18. The intermediate lever 26 is supported pivotally about an axis of the second support shaft 24 in a lower-end portion thereof and extends upwards, and is coupled to the operation pedal 18 via a coupling link 28 at a middle position in the up-down direction. The upper-end portion of the intermediate lever 26 is connected to an operation rod 32 of the brake booster 30, and by being mechanically pivoted about the second support shaft 24 in an anticlockwise direction (outputting direction) via the coupling link 28 in connection with the tread operation of the operation pedal 18, the operation rod 32 is pressed forwards to generate a brake force. The brake booster 30 is fixedly installed integrally on the engine compartment side of the dash panel 12, and the operation rod 32 is disposed projecting from the dash panel 12 into the vehicle interior. The operation rod 32 is equivalent to the output member.

An instrument panel reinforcement 34 positioned on the driver's seat side of the dash panel 12 has a second pedal bracket 36 fixedly installed integrally thereto. The second pedal bracket 36 is overlapped with the first pedal bracket 14 on both sides of the second support shaft 24, and the two are tightened together with a bolt or like member, to integrally couple each other in a supporting manner. This thus enables to attain a predetermined strength and rigidity required of the pedal bracket. The instrument panel reinforcement 34 is equivalent to the vehicle body member, and generally has a lower possibility of displacement to the driver's seat side, that is to say the back side of the vehicle, or has a lower deformation amount, at a time of receiving a large load from the front of the vehicle at a time of collision or the like, than that of the dash panel 12.

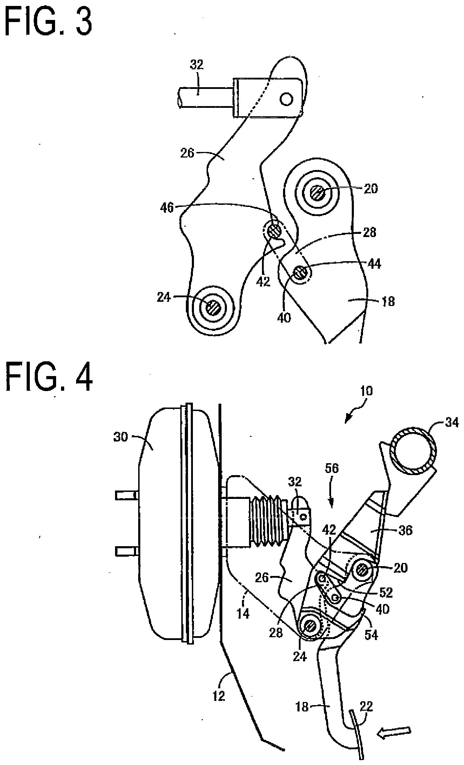

The coupling link 28 is connected relatively pivotally to the operation pedal 18 and the intermediate lever 26 on respective sides, via a respective first connecting pin 40 and second connecting pin 42 that are each parallel to the first support shaft 20. As clearly seen in Fig. 3 in which the second pedal bracket 36 is omitted and the coupling link 28 is illustrated by virtual lines, the first connecting pin 40 on the operation pedal 18 side is arranged pivotally about an axis, in a coupling hole 44 provided in a link coupling point predetermined in the operation pedal 18. Moreover, the second connecting pin 42 on the intermediate lever 26 side is fixed in a detachable manner to a cutout 46 of a semi-circular shape provided in the intermediate lever 26. The first connecting pin 40 is equivalent to the first coupling section, the second connecting pin 42 is equivalent to the second coupling section, and the second coupling section is a separable coupling section that is detachable.

On the other hand, the second pedal bracket 36 also functions as a backdown preventing member, and has an opening 50 capable of containing the coupling link 28 therein and is provided with a guide section 52 and a contact section 54 in the vicinity of the opening 50. The guide section 52, when the operation pedal 18 is trod from its initial position, guides the second connecting pin 42 or the coupling link 28 so that the second connecting pin 42 does not detach from the cutout 46 of the intermediate lever 26, and makes the intermediate lever 26 pivot mechanically in the outputting direction in connection with the operation pedal 18, and the guide section 52 is provided linearly based on a circumferential direction whose center is the second support shaft 24. The guide section may be provided in an arc shape towards a circumferential direction whose center is the second support shaft 24. Fig. 4 is a state in which the operation pedal 18 is trod; the guide section 52 has a length dimension in which the second connecting pin 42 can pivot about the second support shaft 24 together with the cutout 46, in connection with the tread operation of the operation pedal 18.

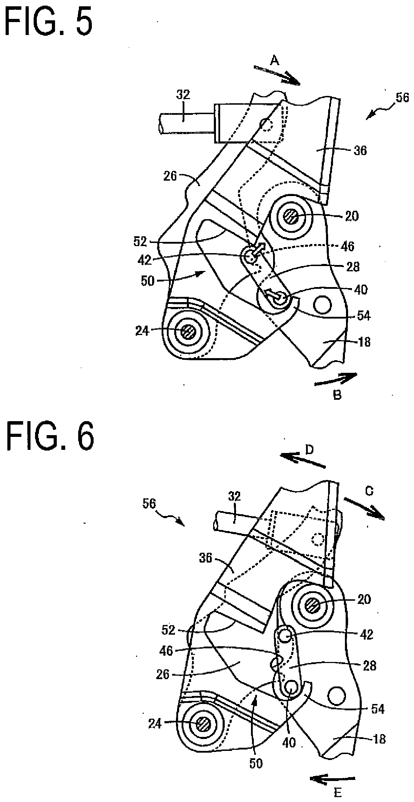

The guide section 52 is also determined in its length dimension (guide region), to allow for the second connecting pin 42 to escape from the guide section 52 together with the cutout 46 and the second connecting pin 42 to detach from the cutout 46, when the intermediate lever 26 is pivoted in a direction opposite of the outputting direction from the initial position illustrated in Fig. 2 at a time of backwards displacement of the dash panel 12. Fig. 5 is a state in which the cutout 46 is escaped from the guide section 52 together with the second connecting pin 42, by the intermediate lever 26 being pivoted from the initial position in an opposite direction as illustrated by the arrow A at the time of backward displacement of the dash panel 12, and the operation pedal 18 being pivoted similarly from the initial position in the opposite direction as illustrated by the arrow B; this thus allows for the second connecting pin 42 to detach upwards from the cutout 46. In the present Example, the second support shaft 24 to which the intermediate lever 26 is disposed is supported by the first pedal bracket 14 and second pedal bracket 36, and thus the backward displacement amount at the time of face collision or the like becomes smaller than that of the brake booster 30 or operation rod 32, and the intermediate lever 26 is pushed by the operation rod 32 based on the difference in the backward displacement amount and made to pivot in the opposite direction.

The contact section 54 functions as a stopper section. At the time of the backward displacement of the dash panel 12, the intermediate lever 26 is pivoted in the opposite direction as illustrated in Fig. 5, and the operation pedal 18 is pivoted by a predetermined amount in the opposite direction together with the pivoting of the intermediate lever; the contact section 54 is provided to come into contact with the first connecting pin 40 or end portion of the coupling link 28 provided in the operation pedal 18, by these pivoting. That is to say, in a state in which the operation pedal 18 is retained in the initial position as illustrated in Fig. 2, a predetermined gap d is provided between the first connecting pin 40 and the contact section 54; by the pivoting of the intermediate lever 26 and the operation pedal 18 in the opposite direction, the gap d allows for the second connecting pin 42 to escape from the guide section 52 as illustrated in Fig. 5. Furthermore, in the state in which the first connecting pin 40 or the end portion of the coupling link 28 is in contact with the contact section 54, when the intermediate lever 26 is further pivoted in the opposite direction as illustrated by the arrow C in Fig. 6, the first connecting pin 40 cannot move backwards anymore; this makes the second connecting pin 42 detach upwards from the cutout 46 due to that reaction force, and the connection between the operation pedal 18 and the intermediate lever 26 by the coupling link 28 becomes released. This allows for the operation pedal 18 to be able to pivot about the first support shaft 20 regardless of a behavior of the intermediate lever 26. Therefore, when the second support shaft 24 is further moved backwards together with the backward displacement of the dash panel 12 thereafter, the second pedal bracket 36 whose upper end portion is fixed to the instrument panel reinforcement 34 is relatively pivoted anticlockwise about the second support shaft 24 as illustrated by the arrow D of Fig. 6, and the operation pedal 18 having the first connecting pin 40 be in contact with the contact section 54 of the second pedal bracket 36 is pivoted relatively in the direction of the tread operation as illustrated by the arrow E. This thus makes the tread section 22 of the operation pedal 18 pivot towards the front side of the vehicle, and is prevented in the backdown towards the driver's seat side by that amount.

According to such a brake pedal device 10 of the present Example, the second connecting pin 42 on the intermediate lever 26 side of the coupling link 28 that couples the operation pedal 18 with the intermediate lever 26 is fixed in the cutout 46 provided in the intermediate lever 26; when the dash panel 12 is displaced backwards for example by collision, the operation pedal 18 is made to be engaged to the contact section 54 and is pivoted relatively in the direction of the tread operation, and the second connecting pin 42 is detached from the cutout 46 thus releasing the connection between the operation pedal 18 and the intermediate lever 26 by the coupling link 28. Accordingly, the operation pedal 18 is pivoted in the direction of the tread operation relatively regardless of the behavior of the intermediate lever 26, and the backdown of the tread section 22 is prevented.

That is to say, in the present Example, the backdown preventing device 56 is constructed of for example the second pedal bracket 36 functioning as the backdown preventing member, the first connecting pin 40, the second connecting pin 42, and the cutout 46. Furthermore, this backdown preventing device 56 does not make the intermediate lever 26 pivot relatively in the outputting direction at the time when the dash panel 12 is displaced backwards, but makes the second connecting pin 42 of the coupling link 28 detach from the cutout 46 of the intermediate lever 26 by the contact section 54 provided in the second pedal bracket 36 engaging with the operation pedal 18, to release the connection of the intermediate lever 26 with the operation pedal 18, and makes the operation pedal 18 pivot relatively in the direction of the tread operation. Therefore, regardless of whether or not the pivoting in the outputting direction of the intermediate lever 26 is possible due to the operation rod 32 not being able to be pushed in, the backdown of the tread section 22 of the operation pedal 18 is prevented as appropriate, and the backdown preventing effect is stably attainable thereafter.

Moreover, in the present Example, the second pedal bracket 36 includes the guide section 52; when the operation pedal 18 is trod from the initial position, the guide section 52 guides so that the second connecting pin 42 does not detach from the cutout 46 of the intermediate lever 26 and that the intermediate lever 26 is pivoted in the outputting direction in connection with the operation pedal 18, whereas at the time of backward displacement of the dash panel 12, the guide section 52 allows for the second connecting pin 42 to escape from the guide region and detach from the cutout 46. Therefore, at the time of tread operation of the operation pedal 18, the intermediate lever 26 is securely pivoted in the outputting direction in connection with the operation pedal 18 without the second connecting pin 42 being detached from the cutout 46, to press the operation rod 32, whereas when the dash panel 12 is displaced backwards at the time of collision or the like, the second connecting pin 42 escapes from the guide region by the guide section 52. This allows for the second connecting pin 42 to detach from the cutout 46, and by the operation pedal 18 becoming engaged with the contact section 54 and be pivoted relatively in the direction of the tread operation, the second connecting pin 42 is detached from the cutout 46, and the connection between the operation pedal 18 and the intermediate lever 26 by the coupling link 28 is securely released. In other words, it is possible to detach the second connecting pin 42 from the cutout 46 and securely release the connection between the operation pedal 18 and the intermediate lever 26, while ensuring freedom in settings of connection position of the first connecting pin 40 and the second connecting pin 42, that is to say, the freedom in settings of the load transfer behavior by the coupling link 28.

Moreover, in the present Example, the contact section 54 made into contact with the first connecting pin 40 arranged to the operation pedal 18 at the time of backwards displacement of the dash panel 12 is provided integrally to the second pedal bracket 36 as a stopper section, and thus the number of members is small and the configuration is made easily and at low costs.

Next described is another Example of the present invention. Parts that are substantially common to the above Example are designated with identical reference signs, and their detailed descriptions have been omitted.

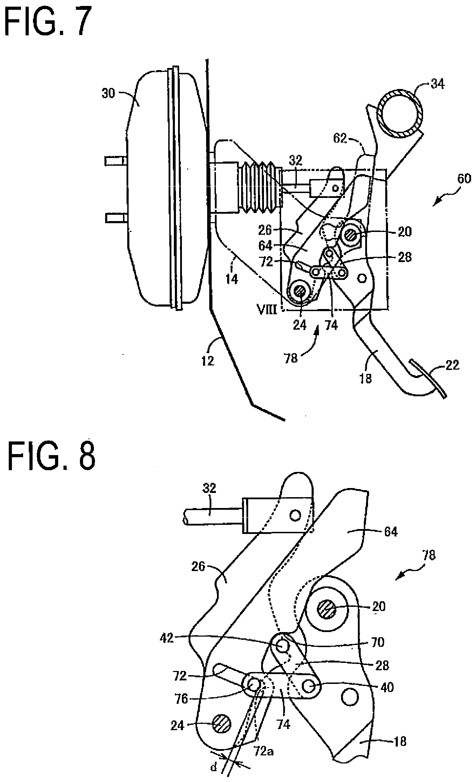

Fig. 7 is a left side view corresponding to Fig. 1, and Fig. 8 is an enlarged view of part VIII in Fig. 7. This brake pedal device 60 includes a second pedal bracket 62 instead of the second pedal bracket 36, and a backdown preventing lever 64 arranged pivotally about the axis of the second support shaft 24 as the backdown preventing member. The second pedal bracket 62 is fixedly installed integrally to the instrument panel reinforcement 34, is overlapped with the first pedal bracket 14 on both side parts of the first support shaft 20, and is connected together integrally so as to support each other by being tightened together with a bolt or like member. This secures the predetermined strength and rigidity required as a pedal bracket. Moreover, the backdown preventing lever 64 is supported pivotally about the axis of the second support shaft 24 in a lower-end portion thereof, and by the upper-end portion thereof be made in contact with the second pedal bracket 62, the backdown preventing lever 64 is retained in a state unable to pivot in the clockwise direction, that is, to the back side of the vehicle, any further. Furthermore, it is also possible to fix the upper-end portion of the backdown preventing lever 64 to the second pedal bracket 62 or the instrument panel reinforcement 34, as necessary.

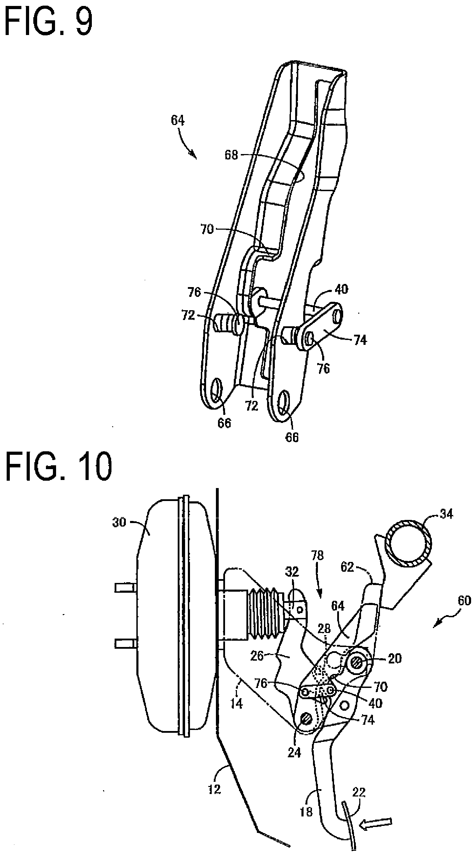

Fig. 9 is a perspective view of the backdown preventing lever 64 seen from a diagonally front side of the vehicle, which backdown preventing lever 64 is of a long shape whose cross section is of a U-shape as a whole; the backdown preventing lever 64 has an attachment hole 66 provided in the lower-end portion through which the second support shaft 24 is inserted, and has an opening 68 provided in a longitudinal direction on a backboard part, to avoid interference with the operation pedal 18 and the intermediate lever 26. A guide section 70 and a long hole 72 are provided in to the backdown preventing lever 64. The backdown preventing lever 64 is coupled to the operation pedal 18 via the long hole 72 and a backdown preventing link 74. The guide section 70 is provided as a flange formed on either sides in a middle part of the opening 68, to guide the coupling link 28 so that the second connecting pin 42 does not detach from the cutout 46 of the intermediate lever 26 when the operation pedal 18 is trod from the initial position, and is made to engage in a slidable manner to an upper side edge of the coupling link 28. The coupling link 28 is inserted through the opening 68 towards the front side of the vehicle while being guided into the guide section 70. This thus allows for maintaining a fixed state of the second connecting pin 42 with the cutout 46, and the intermediate lever 26 is mechanically pivoted in the outputting direction via the coupling link 28 in connection with the tread operation of the operation pedal 18. Fig. 10 is a state in which the operation pedal 18 is trod, in which the fixed state of the second connecting pin 42 with the cutout 46 is maintained by the engagement of the coupling link 28 with the guide section 7.

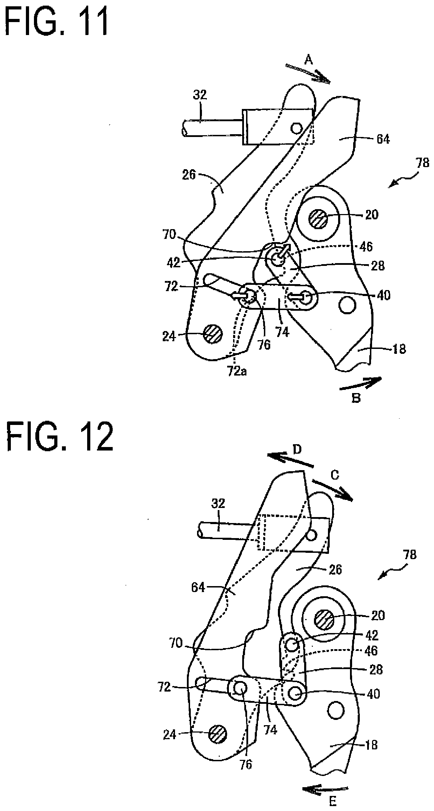

The guide section 70 is also determined in its disposed position in such a manner that, when the intermediate lever 26 is pivoted in the opposite direction from the initial position as illustrated in Fig. 8 at the time of the backwards displacement of the dash panel 12, the guide section 70 allows for the second connecting pin 42 to escape from the guide region by the guide section 70 together with the cutout 46 and the second connecting pin 42 to detach from the cutout 46. Fig. 11 is a state in which the intermediate lever 26 is pivoted in the opposite direction from the initial position as illustrated by the arrow A at the time of backwards displacement of the dash panel 12, and similarly the operation pedal 18 is pivoted in the opposite direction from the initial position as illustrated by the arrow B, thereby making the cutout 46 escape from the guide section 70 together with the second connecting pin 42, and the second connecting pin 42 can be detached upwards from the cutout 46.

An end portion of the backdown preventing link 74 on the operation pedal 18 side is connected relatively pivotally to the first connecting pin 40 arranged to the operation pedal 18, and the other end portion is connected relatively pivotally to the long hole 72 provided in the backdown preventing lever 64 via a third connecting pin 76. The long hole 72 is provided having a predetermined length linearly towards a circumferential direction whose center is the second support shaft 24, so that the intermediate lever 26 does not hinder the pivoting in the outputting direction in connection with the tread operation of the operation pedal 18, in other words, to not hinder the tread operation of the operation pedal 18, at the time when the operation pedal 18 is trod from the initial position.

On the other hand, when the intermediate lever 26 is pivoted in the opposite direction as illustrated in Fig. 11 at the time of backwards displacement of the dash panel 12 and the operation pedal 18 is pivoted just by a predetermined amount to the opposite direction in accordance with this, the third connecting pin 76 is made to be in contact with one end portion 72a of the long hole 72. That is to say, in a state in which the operation pedal 18 is retained in the initial position as illustrated in Fig. 8, a predetermined gap d is provided between the third connecting pin 76 and the one end portion 72a, and by the intermediate lever 26 and the operation pedal 18 pivoting in the opposite direction, the second connecting pin 42 is allowed to escape from the guide section 70 as illustrated in Fig. 11. Furthermore, when the intermediate lever 26 is pivoted further in the opposite direction as illustrated by the arrow C in Fig. 12 in a state in which the third connecting pin 76 is in contact with the one end portion 72a, the second connecting pin 42 detaches upwards from the cutout 46 by reaction force since the first connecting pin 40 connected to the third connecting pin 76 via the backdown preventing link 74 cannot move backwards any further. This thus releases the connection between the operation pedal 18 and the intermediate lever 26 by the coupling link 28. Accordingly, the operation pedal 18 is able to pivot about the first support shaft 20 regardless of the behavior of the intermediate lever 26. Therefore, when the second support shaft 24 is moved backwards further together with the backward displacement of the dash panel 12 thereafter, the backdown preventing lever 64 whose upper end portion is fixed to the instrument panel reinforcement 34 is pivoted anticlockwise about the second support shaft 24 as illustrated by the arrow D in Fig. 12, and the operation pedal 18 coupled to the backdown preventing lever 64 via the backdown preventing link 74 is relatively pivoted in the direction of the tread operation, as illustrated by the arrow E. This thus makes the tread section 22 of the operation pedal 18 pivot towards the front side of the vehicle, and the backdown towards the driver's seat side is prevented by that amount. The one end portion 72a of the long hole 72 is equivalent to the stopper section, and the third connecting pin 76 is equivalent to one of the coupling sections.

As such, even in the brake pedal device 60 of the present Example, the second connecting pin 42 escapes from the guide region by the guide section 70 and the second connecting pin 42 is allowed to detach from the cutout 46 when the dash panel 12 is displaced backwards for example at the time of collision, and by the third connecting pin 76 of the backdown preventing link 74 be in contact with the one end portion 72a of the long hole 72, the operation pedal 18 is relatively pivoted in the direction of the tread operation. Accordingly, the second connecting pin 42 is detached from the cutout 46 and the connection between the operation pedal 18 and the intermediate lever 26 by the coupling link 28 is released; this thus allows for the operation pedal 18 to pivot relatively in the direction of the tread operation regardless of the behavior of the intermediate lever 26, and prevent the backdown of the tread section 22.

That is to say, in the present Example, the backdown preventing device 78 is constructed of for example the backdown preventing lever 64 that functions as the backdown preventing member, the backdown preventing link 74, the first connecting pin 40, the second connecting pin 42, the third connecting pin 76, and the cutout 46. Furthermore, the backdown preventing device 78 does not make the intermediate lever 26 relatively pivot in the outputting direction when the dash panel 12 is displaced backwards, but makes the third connecting pin 76 of the backdown preventing link 74 be in contact with the one end portion 72a of the long hole 72 to detach the second connecting pin 42 of the coupling link 28 from the cutout 46 of the intermediate lever 26 to release the connection between the intermediate lever 26 and the operation pedal 18, and makes the operation pedal 18 pivot relatively in the direction of the tread operation. Therefore, regardless of whether or not the pivoting in the outputting direction of the intermediate lever 26 is possible or not due to the operation rod 32 not being able to be pushed in, the backdown of the tread section 22 of the operation pedal 18 is prevented as appropriate, and the backdown preventing effect is obtained stably thereafter.

Moreover, the backdown preventing lever 64 includes the guide section 70; in a case in which the operation pedal 18 is trod from the initial position, the second connecting pin 42 is guided to be not detached from the cutout 46 of the intermediate lever 26 and is made so that the intermediate lever 26 is pivoted in the output direction in connection with the operation pedal 18, whereas at the time of backward displacement of the dash panel 12, the guide section 70 allows for the second connecting pin 42 to escape from the guide region and detach from the cutout 46. Therefore, while at the time of tread operation of the operation pedal 18, the intermediate lever 26 is pivoted securely in the outputting direction in connection with the operation pedal 18 without the second connecting pin 42 detaching from the cutout 46 and thereby the operation rod 32 is pressed, when the dash panel 12 is displaced backwards at the time of collision or the like, the second connecting pin 42 escapes from the guide region by the guide section 70 to allow the second connecting pin 42 to detach from the cutout 46. And by the third connecting pin 76 of the backdown preventing link 74 being in contact with the one end portion 72a of the long hole 72, the operation pedal 18 is pivoted relatively in the direction of the tread operation. Therefore, the second connecting pin 42 is detached from the cutout 46, and the connection between the operation pedal 18 and the intermediate lever 26 by the coupling link 28 is securely released. That is to say, it is possible to detach the second connecting pin 42 from the cutout 46 and securely release the connection between the operation pedal 18 and the intermediate lever 26, while ensuring freedom in the settings of the connection position of the first connecting pin 40 and the second connecting pin 42, that is to say, the freedom in settings of load transfer behavior by the coupling link 28.

Moreover, the backdown preventing link 74 is disposed across the operation pedal 18 and the backdown preventing lever 64, and the third connecting pin 76 is connected to the backdown preventing lever 64 via the long hole 72; by the third connecting pin 76 be made into contact with the one end portion 72a of the long hole 72 at the time of backwards displacement of the dash panel 12, the operation pedal 18 is pivoted relatively in the direction of the tread operation. Accordingly, the freedom in design of the backdown preventing lever 64 related to the long hole 72 functioning as the stopper section is high, and the device can be configured in a compact manner.

Although the above describes in details of the Examples of the present invention based on the drawings, these are merely one embodiment of the present invention, and the present invention may be implemented in aspects to which various changes and modifications are made, based on the knowledge of a person skilled in the art.

### [Reference Signs]

10, 60: Brake pedal device (vehicular pedal device) 12: Dash panel 14: First pedal bracket 18: Operation pedal 20: First support shaft 22: Tread section 24: Second support shaft 26: Intermediate lever 28: Coupling link 32: Operation rod (output member) 34: Instrument panel reinforcement (vehicle body member) 36: Second pedal bracket (backdown preventing member) 40: First connecting pin (first coupling section, separable coupling section) 42: Second connecting pin (second coupling section) 46: Cutout 52, 70: Guide section 54: Contact section (stopper section) 56, 78: Backdown preventing device 62: Second pedal bracket 64: Backdown preventing lever (Backdown preventing member) 72: Long hole 72a: One end portion (stopper section) 74: Backdown preventing link 76: Third connecting pin (one of the coupling sections)

## Claims

1. A backdown preventing device for vehicular pedal device that includes
a pedal bracket arranged to a dash panel;
an operation pedal arranged to the pedal bracket pivotally about an axis of a first support shaft, whose tread section provided in a lower-end portion of the operation pedal is trod towards a front side of a vehicle as a tread operation of the operation pedal; and
an intermediate lever arranged to the pedal bracket pivotally about an axis of a second support shaft parallel to the first support shaft, the intermediate lever being coupled to the operation pedal via a coupling link and adapted to operate a predetermined output member by being pivoted in an outputting direction mechanically in connection with the tread operation of the operation pedal,
the backdown preventing device adapted to prevent the tread section of the operation pedal from moving backwards toward a driver's seat side when the dash panel is displaced backwards toward the driver's seat side, charactering in that:
either one of a first coupling section on a side of the operation pedal of the coupling link or a second coupling section on a side of the intermediate lever of the coupling link is a separable coupling section coupled in a separable manner via a cutout, and
a backdown preventing member supported to a vehicle body member provided in a side closer to the driver's seat from the dash panel is provided with a stopper section being adapted to be engaged with the operation pedal at a time of backward displacement of the dash panel to make the operation pedal pivot relatively in the direction of the tread operation, and making the separable coupling section separate to release a connection between the operation pedal and the intermediate lever by the coupling link.

2. A backdown preventing device for vehicular pedal device that includes
a pedal bracket arranged to a dash panel;
an operation pedal arranged to the pedal bracket pivotally about an axis of a first support shaft, whose tread section provided in a lower-end portion of the operation pedal is trod towards a front side of a vehicle as a tread operation of the operation pedal; and
an intermediate lever arranged to the pedal bracket pivotally about an axis of a second support shaft parallel to the first support shaft, the intermediate lever being coupled to the operation pedal via a coupling link and adapted to operate a predetermined output member by being pivoted in an outputting direction mechanically in connection with the tread operation of the operation pedal,
the backdown preventing device adapted to prevent the tread section of the operation pedal from moving backwards toward a driver's seat side when the dash panel is displaced backwards toward the driver's seat side, charactering in that:
a first coupling section on a side of the operation pedal of the coupling link is connected relatively pivotally about a link coupling point of the operation pedal, and a second coupling section on a side of the intermediate lever of the coupling link is fixed detachably to a cutout provided in the intermediate lever, and
a backdown preventing member supported to a vehicle body member provided in a side closer to the driver's seat from the dash panel is provided with a stopper section being adapted to be engaged with the operation pedal at a time of backward displacement of the dash panel to make the operation pedal pivot relatively in the direction of the tread operation" and making the second coupling section detach from the cutout to release a connection between the operation pedal and the intermediate lever by the coupling link.

3. The backdown preventing device for vehicular pedal device according to claim 2, wherein
the backdown preventing member comprises a guide section, adapted to guide so that the second coupling section does not detach from the cutout of the intermediate lever and make the intermediate lever pivot in an outputting direction in connection with the operation pedal in a case in which the operation pedal is trod from an initial position, whereas at a time of backward displacement of the dash panel, allow for the second coupling section to escape from a guide region and detach from the cutout.

4. The backdown preventing device for vehicular pedal device according to claim 2 or 3, wherein
the backdown preventing member is provided with a contact section provided as the stopper section, the contact section being made into contact with the first coupling section coupled to the operation pedal at a time of backwards displacement of the dash panel.

5. The backdown preventing device for vehicular pedal device according to any one of claims 1 to 3, comprising:
a backdown preventing link connected relatively pivotally across the operation pedal and the backdown preventing member, to which at least one of the coupling sections is connected via a long hole to allow for a tread operation of the operation pedal, wherein
the one of the coupling sections of the backdown preventing link contacts a one end portion of the long hole at a time of backwards displacement of the dash panel to make the operation pedal pivot relatively in the direction of the tread operation, and among the one of the coupling sections and the one end portion of the long hole, the one arranged on a side closer to the backdown preventing member is the stopper section.
